Europäisches Patentamt

European Patent Office

Office européen des brevets

(11) Veröffentlichungsnummer: **0 189 748**
A1

(12) # EUROPÄISCHE PATENTANMELDUNG

(21) Anmeldenummer: 86100063.6

(22) Anmeldetag: 03.01.86

(51) Int. Cl.⁴: **C 04 B 41/50**

(30) Priorität: 14.01.85 DE 3500998

(43) Veröffentlichungstag der Anmeldung:
06.08.86 Patentblatt 86/32

(84) Benannte Vertragsstaaten:
AT BE CH DE FR GB IT LI LU NL SE

(71) Anmelder: INTERATOM Gesellschaft mit beschränkter Haftung
Friedrich-Ebert-Strasse
D-5060 Bergisch Gladbach 1(DE)

(72) Erfinder: Reck, Alfred, Dipl.-Ing. (FH)
Kollenbacher Strasse 3a
D-5067 Biesfeld(DE)

(72) Erfinder: Jung, Jürgen. Dr. Dipl.-Ing.
Barbarastrasse 3
D-5060 Bergisch-Gladbach(DE)

(74) Vertreter: Mehl, Ernst, Dipl.-Ing. et al,
Postfach 22 01 76
D-8000 München 22(DE)

(54) Verfahren zur Oberflächenverfestigung von Formkörpern aus keramischer Faser.

(57) Faserkeramische Körper mit hoher Wärmedämmfähigkeit und Temperaturbeständigkeit, die als Isoliermaterial, Filter oder Katalysatorträger verwendet werden sollen, werden zur Erhöhung ihrer Oberflächenfestigkeit mit einer thermisch aufgespritzten Schicht aus möglichst dem gleichen keramischen Material versehen.

EP 0 189 748 A1

INTERATOM GmbH

D-5060 Bergisch Gladbach 1

Verfahren zur Oberflächenverfestigung von Formkörpern aus keramischer Faser

Die vorliegende Erfindung betrifft ein Verfahren zur Oberflächenverfestigung von Formkörpern aus einer miteinem Bindemittel gebrannten Suspension von keramischen Fasern nach dem Oberbegriff des 1. Anspruchs. Diese Faserformkörper können mittels desjenigen Verfahrens hergestellt sein, das die Anmelderin in der EP-A-0 124 033 beschrieben hat. Zwar zeichnen sich diese Faserformkörper durch ein geringes Raumgewicht, geringe Wärmekapazität und eine hohe Temperatur- und Temperaturwechselbeständigkeit aus, doch reicht ihre Oberflächenfestigkeit nicht für alle Verwendungszwecke aus·

Aus der US-A-3 917 782 ist ein Verfahren zur Herstellung dünnwandiger keramischer Gegenstände bekannt, bei dem ein Keramikpulver (es werden Aluminiumoxyd, Aluminiumtitanat, Zirkontitanat und Magnesiumzirkonat vorgeschlagen) mittels eines thermischen Spritzverfahrens auf einen in Drehung versetzten rotationssymmetrischen Kern aufgebracht wird, bis die gewünschte geringe Wanddicke erreicht ist. Der so entstehende Formkörper wird soweit erforderlich nachgesintert und anschließend vom Kern abgeformt. Eine Weiterentwicklung dieses Verfahrens, mit dem auch dickwandige Hohlkörper herstellbar sind, wird in der DE-A-30 01 371 beschrieben. Die so hergestellten Keramikkörper weisen zwar eine hohe Festigkeit auf, haben jedoch auch die bekannten Nachteile einer Festkeramik, nämlich hohes Gewicht, hohe Wärmeleitfähigkeit und eine große

-2-

Temperaturwechselanfälligkeit.

Aufgabe der vorliegenden Erfindung ist ein Verfahren, mittels dessen keramische Formkörper herstellbar sind, die die vorteilhaften Eigenschaften von Festkeramik und faserkeramischem Körpern miteinander vereinigen und dadurch erst auf bestimmten Anwendungsgebieten einsetzbar werden, so zum Beispiel als Isoliermaterial in Rohrleitungen, in denen Gase mit einer Temperatur bis zu $1000^{\circ}$ C mit hoher Geschwindigkeit fortgeleitet werden. Hierfür sind sowohl eine geringe Wärmeleitfähigkeit und- kapazität als auch eine hohe Abriebfestigkeit der Oberfläche von Bedeutung.

Die Lösung dieser Aufgabe erfolgt durch die im kennzeichnenden Teil des Anspruchs angegebenen Mittel. Wegen der geringen Wärmeleitfähigkeit des faserkeramischen Grundkörpers entsteht beim Auftreffen des aufgespritzten Keramikmaterials eine Sinterzone, die eine innige Verzahnung der beiden Werkstoffe miteinander gewährleistet. Soweit nicht Grundmaterial der gleichen chemischen Zusammensetzung für die Faserkeramik und die Oberflächenschicht gewählt wird,   wird der Fachmann doch darauf achten, nur Paarungen zwischen zwei Werkstoffen vorzunehmen, die ähnliche Ausdehnungskoeffizienten aufweisen. Ebenso richten sich die Materialauswahl und die Dicke und Ausdehnung der aufzubringenden Schicht nach dem jeweils beabsichtigten Einsatzzweck, wobei die in Aussicht genommenen Temperaturbereiche und die erforderliche Beständigkeit gegenüber den damit in Kontakt zu bringenden Stoffen von Wichtigkeit sind.

85 P 6702 E
0189748

Die gemäß dem erfindungsgemäßen Verfahren hergestellten Verbundformkörper können nicht nur zu den oben angegebenen Zwecken mit hoher thermischer Belastung verwendet werden, sondern zum Beispiel auch als Filter oder Katalysatorträger, wobei die aufgespritzte Oberflächenschicht nur die Funktion einer mechanischen Armierung erfüllt.

INTERATOM GmbH                    -4-

D-5060 Bergisch Gladbach 1


Verfahren zur Oberflächenverfestigung von Formkörpern aus keramischer Faser


Patentanspruch


1. Verfahren zur Oberflächenverfestigung von Formkörpern aus einer mit einem Bindemittel gebrannten Suspension von keramischen Fasern,

d a d u r c h   g e k e n n z e i c h n e t ,

daß die Formkörper zumindest auf einen Teil ihrer Oberfläche mittels des an sich bekannten thermischen Spritzverfahrens keramisch beschichtet werden.

**0189748**

Nummer der Anmeldung

EP 86 10 0063

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y | US-A-4 357 387 (S. GEORGE et al.) <br> * Spalte 5, Zeilen 40-43; Zusammenfassung * | 1 | C 04 B 41/50 |
| Y | DE-A-2 900 225 (ODENWALD FASER PLATTENWERK) <br> * Ansprüche 1,2,4,6,12 * | 1 | |
| A | FR-A-2 026 268 (T.G. McNISH) <br> * Ansprüche 1-4,6 * | 1 | |
| A | US-A-4 340 635 (R.A. LANGMAN et al.) | | |

RECHERCHIERTE
SACHGEBIETE (Int. Cl.4)

C 04 B 41/00
C 04 B 28/00
C 04 B 30/00
C 04 B 26/00

Der vorliegende Recherchenbericht wurde für alle Patentansprüche erstellt.

| Recherchenort <br> DEN HAAG | Abschlußdatum der Recherche <br> 18-04-1986 | Prüfer <br> DAELEMAN P.C.A. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82